# EUROPEAN PATENT SPECIFICATION

(11) **EP 1 974 851 B1**
(45) Date of publication and mention of the grant of the patent: **13.07.2011**
(21) Application number: 08153453.9
(22) Date of filing: 27.03.2008
(51) Int. Cl.: B23P 15/26, F28D 1/047, F25D 25/02, F28F 1/12, F25B 39/02

(54) **Method for manufacturing heat exchangers usable as static rack evaporators in cabinet refrigerators or freezers**
Verfahren zur Herstellung von Wärmetauschern, die als statische Gestellverdampfer in Kühl- oder Gefrierschränken benutzt werden können
Procédé de fabrication d'échangeurs de chaleur utilisables en tant qu'évaporateurs étagères statiques dans des réfrigérateurs ou des congélateurs

(30) Priority: 30.03.2007 IT MI20070659
(43) Date of publication of application: 01.10.2008
(73) Proprietor: Condenser S.R.L., 23845 Costa Masnaga (LC) (IT)
(72) Inventor: Bernasconi, Giorgio, 21011 Casorate Sempione VA (IT); Bodio, Paolo, 21021 Angera VA (IT)
(74) Representative: Modiano, Micaela Nadia

(56) References cited:
- EP-A- 0 608 741
- GB-A- 2 008 733
- GB-A- 2 145 806

## Description

The present invention relates to a method for manufacturing heat exchangers which can be used as static rack evaporators in cabinet refrigerators or freezers according to the preamble of claim 1 and to a corresponding heat exchanger as per the preamble of claim 9.

Inside vertical freezers, both for domestic and for commercial use, or freezing compartments in refrigerators for domestic use, it is known to use rack evaporators, in which each rack is constituted by a metal tube shaped like a coil, with mutually parallel straight portions connected by bends at their ends, inside which the refrigerating fluid flows. Each rack is completed by metal wires, which are generally welded to the straight portions of the coil on one or both faces of the coil and are designed to define the supporting surface of the rack and to increase considerably the heat exchange surface of the rack of the exchanger.

Currently commercially available evaporators of this kind are composed of a plurality of racks which are connected one another by means of joints, generally provided by welding, braze welding, adhesive bonding or by means of lock rings, between the ends of the tubes that compose the coil of each rack.

The joints of the tubes, during the life of these evaporators, can cause leaks of the refrigerating fluid pumped in the evaporator, causing defects and poor operation of the refrigerating apparatus.

This problem is currently felt even more than before, since the amount of refrigerating fluid used in refrigeration circuits is small and therefore the loss of very small amounts of refrigerating fluid can cause problems in the correct operation of the apparatus.

Moreover, due to the fact that in the current production of domestic and commercial refrigerators isobutane is used increasingly as the refrigerating fluid, any leaks from the evaporators can cause the danger of explosions.

These problems force evaporator manufacturers to perform strict tightness checks, with high costs which affect significantly the overall production costs.

In order to solve these problems, rack evaporators without tube joints between the several racks have been proposed. One of these evaporators is disclosed for example in European patent EP-608.741. Substantially, in such evaporators, the several racks are provided by bending a single tube, thus avoiding the need for joints of the tube between the several racks, but the process for manufacturing these evaporators requires, due to bending requirements, the metal wires not to be welded to the straight portions of the coil located at the perimetric sides of the rack which are connected to the overlying or underlying rack. This requirement inevitably reduces the refrigerating efficiency of evaporators, since it reduces their heat exchange surface.

In GB 2 0098 733 which discloses in combination the features of the preambles of claims 1 and 9, is disclosed a method of forming such evaporators including the step of providing a single length of tubing which is first bent in a single plane to form a plurality of sinuous sections which are integrally interconnected by connecting portions of tubing, this bent tubing subsequently being subjected to further bending or twisting in order to arrange the sinuous sections in their final disposition in which they are disposed in the spaced parallel planes as aforesaid. The connecting portions are inclined between each pair of contiguous sinuous sections and all these connecting portions do not lie on the same face of the ideal parallelepiped defined by the evaporator. This brings more constraints for the mounting of other elements, such as shelves, drawers, blocking frames, etc. Moreover it brings the drawback of bulk during packaging, shipping or treatment.

The aim of the present invention is to solve the problems described above by devising a method which allows to produce heat exchangers which can be used as static rack evaporators in cabinet refrigerators or freezers, with a reduced number of joints, or even entirely without joints, without penalizing the heat exchange surface.

Within this aim, an object of the invention is to propose a method which, by reducing or eliminating the number of joints provided along the heat exchanger, reduces or eliminates the need for tightness checks, allowing a considerable saving on production costs.

Another object of the invention is to provide a heat exchanger usable as a rack evaporator in cabinet refrigerators or freezers which offers the greatest assurances of reliability and safety in operation.

This aim and these and other objects, which will become better apparent hereinafter, are achieved by a method for manufacturing heat exchangers usable as static rack evaporators in cabinet refrigerators or freezers, as defined in claim 1 and by a corresponding heat exchanger as defined in claim 9.

Further characteristics and advantages of the invention will become better apparent from the description of a preferred but not exclusive embodiment of the method according to the invention, illustrated by way of non-limiting example in the accompanying drawings, wherein:

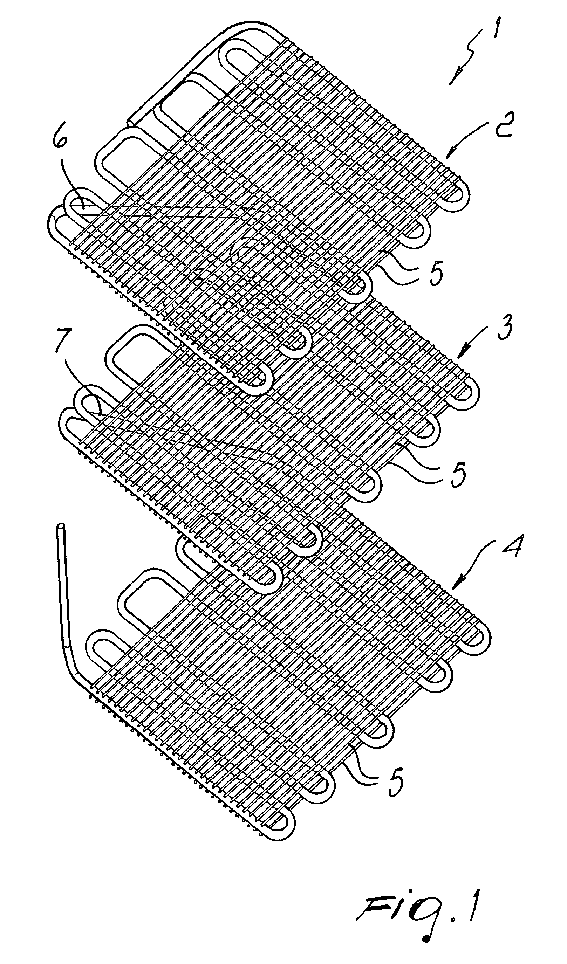

Figure 1 is a perspective view of a rack evaporator composed of three racks, provided by means of the method according to the invention;

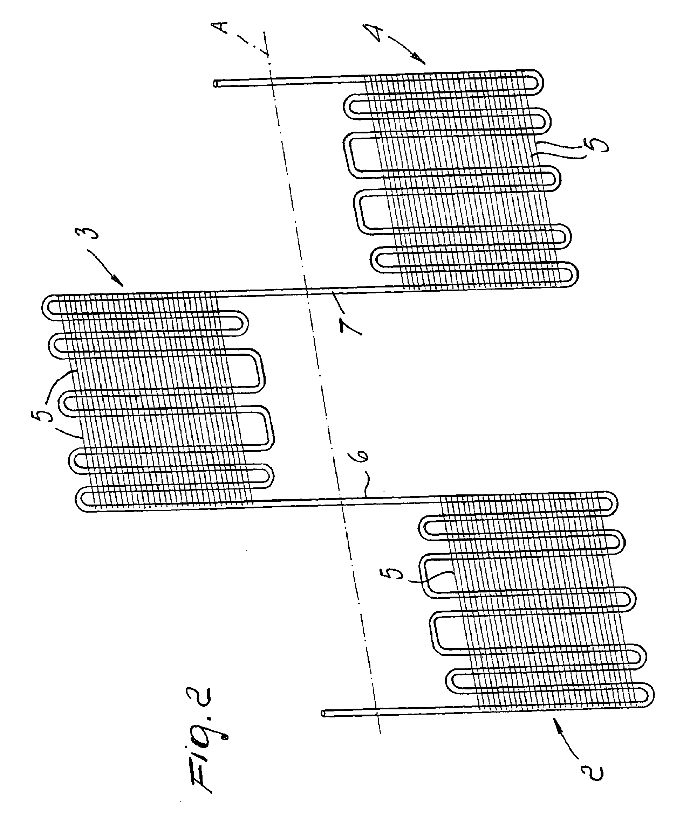

Figures 2 to 8 are schematic perspective views of the sequence of execution of the method according to the invention in the production of the evaporator shown in Figure 1.

With reference to the figures, a heat exchanger, particularly a static rack evaporator designed to be used in cabinet refrigerators or freezers, generally designated by the reference numeral 1, obtained with the method according to the invention, comprises at least two racks 2, 3, 4, which are arranged on mutually parallel planes and face each other in pairs.

In the illustrated embodiment, the evaporator is composed of three racks 2, 3, 4, but the number of racks can vary according to requirements.

Each rack 2, 3, 4 is composed of a coiled metal tube with mutually parallel straight portions joined at their ends by bends.

A number of metal wires 5 are welded to at least one of the two largest faces of each rack, preferably to both of the largest faces of each rack at the straight portions of the corresponding coil.

Such metal wires 5 are parallel and mutually spaced and are oriented at right angles to the straight portions of the coil of the corresponding rack 2,3, 4.

The coils of two contiguous racks, for example the racks 2 and 3 or the racks 3 and 4, are mutually connected by a tube portion 6, 7 which lies at an angle with respect to the planes of arrangement of the two contiguous racks from the end of one perimetric side of one rack to the opposite end of the perimetric side of the contiguous rack that faces said rack.

In the evaporator obtained with the method according to the invention, the coils of the several racks 2, 3, 4 are provided by means of a same tube and the wires 5 are welded to all the straight portions of the coil of the corresponding rack.

The method for manufacturing a heat exchanger which can be used as a static rack evaporator in cabinet refrigerators or freezers according to the invention comprises a step for providing, by bending on a primary plane a same metal tube, at least two racks 2, 3, 4, each constituted by a coil composed of straight portions which are alternated with substantially coplanar bends of the tube. The racks are connected in pairs to each other by a substantially straight intermediate portion of the tube and are arranged, on mutually opposite sides, with respect to a plane of symmetry A which is perpendicular to the primary plane on which the coils of the racks lie and to the intermediate tube portion 6, 7 which mutually connects the coils of the racks in pairs and are mutually offset along a direction which is parallel to the plane of symmetry A.

At the end of this step, the straight portions of the coils of the several racks 2, 3, 4 are substantially parallel to each other and to the intermediate tube portions 6, 7, and the intermediate tube portion 6, 7 that mutually connects the coils of two contiguous racks constitutes the common extension for two straight portions of the coils that define respectively a perimetric side of one rack and a perimetric side of the contiguous rack.

The metal wires 5 are then welded to the largest faces of the racks 2, 3, 4, preferably to both of the largest faces of the coil of each rack. The metal wires 5, as mentioned above, are welded preferably to all the straight portions of the coil of each rack 2, 3, 4, i.e., also to the straight portions that lie at two opposite perimetric sides of the corresponding rack. The metal wires 5 of each rack are mutually parallel and perpendicular to the straight portions of the coil to which they are welded.

The tube by means of which the coils of the several racks 2, 3, 4 are provided and the metal wires 5 can be made of steel, aluminum or copper. The outside diameter of the tube can range by way of example from 6 to 10 mm. Merely by way of example, the distance between two contiguous straight portions of a same coil can range from 10 to 70 mm, while the distance between two contiguous wires on a same rack can range from 4 to 20 mm.

Subsequently, a step for subjecting to torsion the intermediate tube portion about its own axis is performed so as to move one rack onto a plane which is inclined with respect to the plane of arrangement of the other rack or contiguous rack.

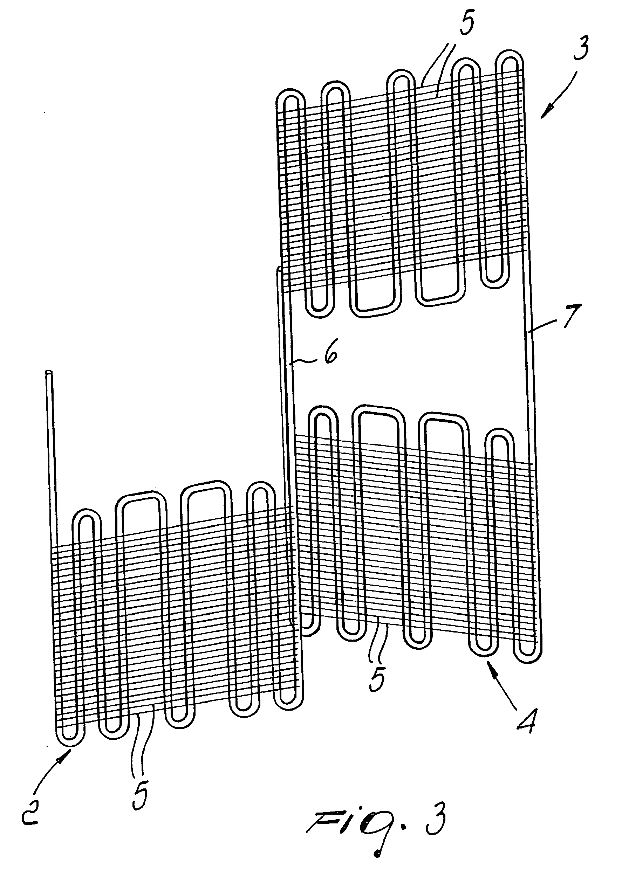

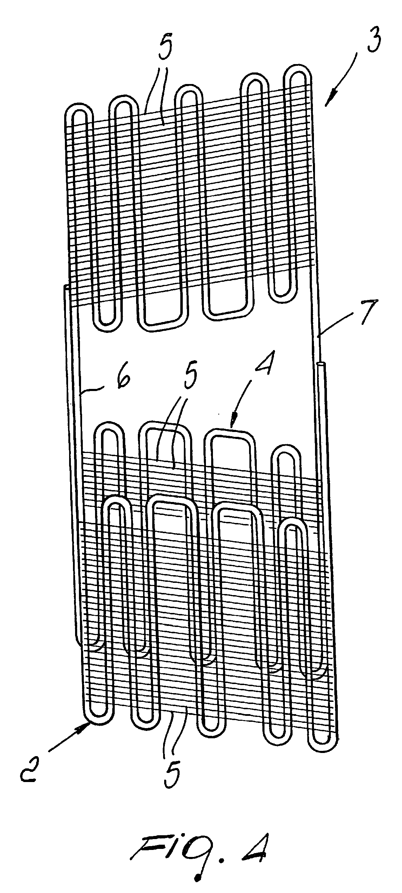

In the illustrated embodiment, in which the evaporator is composed of three racks, the intermediate tube portion 7 that lies between the rack 2 and the rack 4 is subjected to torsion, as shown in Figure 3, and then the intermediate tube portion 6 that lies between the rack 2 and the rack 4 is subjected to a torsion, as shown in Figure 4.

The torsion of the intermediate tube portions 6 and 7 is performed by locking the corresponding intermediate tube portion 6 or 7 at its ends, for example by means of clamps, and by turning one end of the intermediate tube portion 6 or 7 with respect to the other end of the intermediate tube portion about its own axis.

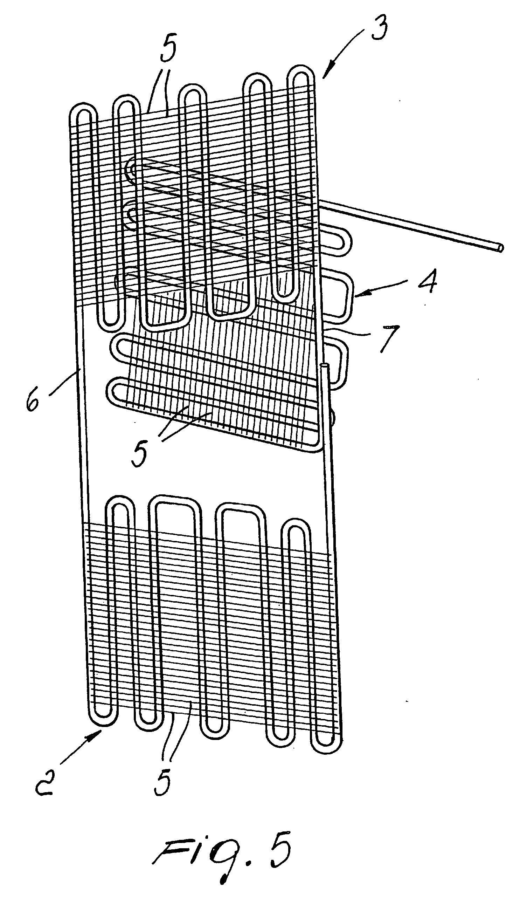

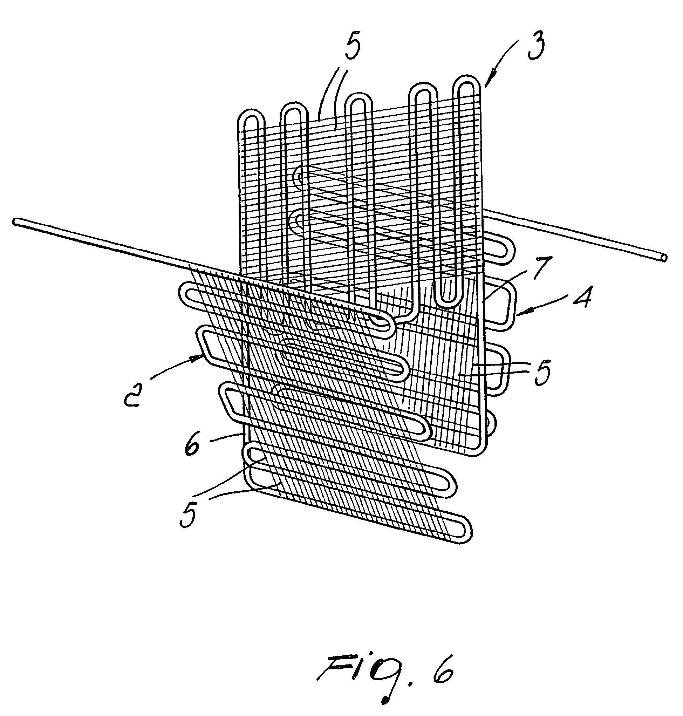

A first step for bending, at an angle of substantially 90°, the intermediate tube portion 6 and/or 7 at one of its ends connected to a rack is performed. In the illustrated embodiment, a 90° bending of the intermediate tube portion 7 is performed at its end connected to the rack 4, as shown in Figure 5, and then a 90° bending of the intermediate tube portion 6 is performed at its end connected to the rack 2, as shown in Figure 6.

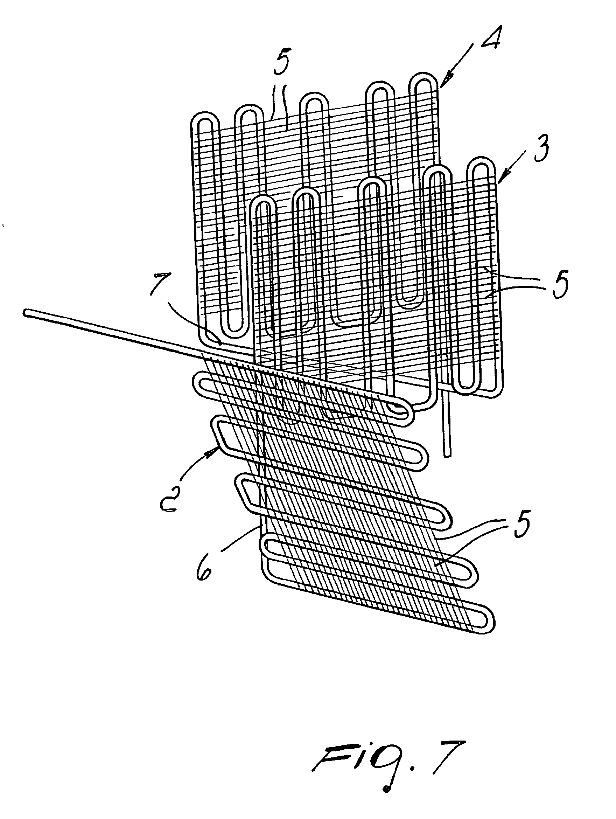

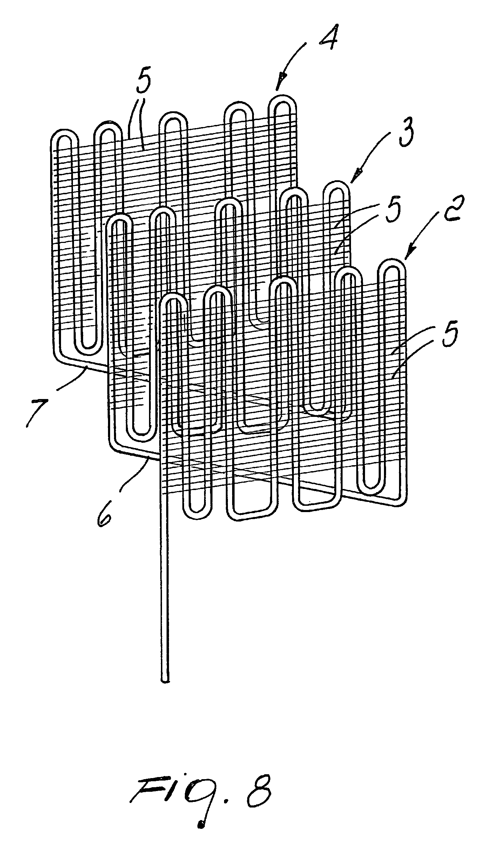

A second step for bending, at an angle of substantially 90°, the intermediate tube portion 6 and/or 7 at its other end connected to the contiguous rack is then performed. In the illustrated embodiment, a 90° bending of the intermediate tube portion 7 is performed at its end connected to the rack 3, as shown in Figure 7, followed by a 90° bending of the intermediate tube portion 6 at its end connected to the rack 3, as shown in Figure 8.

It should be noted that in the illustrated embodiment, in which the rack 3 located between the racks 2 and 4 is kept stationary, the torsion of the intermediate tube portions 6 and 7 is performed with mutually opposite directions of torsion and the two bending steps on each intermediate tube portion 6 or 7 are performed with the same bending direction, so that the second bending step has the effect of arranging the racks 2 and 4 so that they face the rack 3 on mutually opposite sides.

Moreover, the two steps for bending on each intermediate tube portion 6 or 7 are performed on planes which are inclined with respect to the planes of arrangement of the racks, so that the intermediate tube portion 6 or 7, at the end of the two bending steps, lies in an inclined arrangement between the two racks that it connects.

It should be noted that the two bending steps, due to the fact that they are performed along planes which are inclined with respect to the plane of arrangement of the rack 2 or 4 that is moved, have the effect of producing both a rotation of these racks about an axis which is perpendicular to their plane of arrangement and a rotation thereof about their side which is joined to the intermediate tube portion 6 or 7 that joins them to the rack 3, and this rotation is added to the rotation produced by the torsion of the intermediate tube portion 6 or 7 performed earlier.

Taking into account the fact that the two bending steps produce a further rotation of the racks 2 and 4 about their side which is joined to the intermediate tube portion 6, 7, so that at the end of the torsion and bending steps the racks 2 and 4 lie on planes which are parallel to the plane of arrangement of the rack 3, during the torsion step the intermediate tube portions 6 or 7 are subjected to a torsion about their own axis through an angle of 180° minus the angle of rotation about said side of the racks 2 and 4 which is subsequently produced by the bending steps and depends on the length and inclination selected for the intermediate tube portion 6 and 7 between the racks 2, 3 and 4.

In practice, at the end of the torsion and bending steps described above, the racks 2 and 4 have undergone, with respect to the rack 3, both a rotation of 180° about an axis which is perpendicular to the corresponding plane of arrangement and a rotation substantially of 180° about their side connected to the rack 3. In this manner, the racks 2 and 4, at the end of the torsion and bending steps, face the rack 3 on mutually opposite sides on planes which are parallel and spaced with respect to the plane of arrangement of the rack 3. Moreover, the straight portions of the coils of the racks 2, 3, 4 are mutually parallel and the intermediate tube portions 6 and 7 are inclined between the two racks that they connect from the end of one perimetric side of one rack to the opposite end of the perimetric side of the contiguous rack that faces said rack.

By way of example, the distance between two contiguous racks can range from 100 to 1000 mm.

It should be noted that although the sequence described above is preferred, the sequence of the steps of the method according to the invention can also be different.

Moreover, the number of racks that compose the heat exchanger according to the invention may also vary according to requirements.

Although it is possible, by means of the method according to the invention, to manufacture heat exchangers composed generically of more than two racks, it can be convenient, due to production requirements, to manufacture exchangers composed of a maximum of two or three racks provided by means of a same tube. In this case it is in any case possible to provide heat exchangers composed of a large number of racks by mutually assembling, by welding, braze welding, adhesive bonding or locking rings, assemblies of exchangers manufactured with the method according to the invention, i.e., each composed of two or three racks provided by means of a single tube. In this case, although the heat exchanger has joints, their number is distinctly smaller than in heat exchangers manufactured in the traditional manner, i.e., with a joint for each rack.

In practice it has been found that the method according to the invention fully achieves the intended aim, since it allows to manufacture heat exchangers which can be used as static rack evaporators in cabinet refrigerators or freezers with a reduced number of joints or even with no joints at all, without penalizing the heat exchange surface.

The materials used, so long as they are compatible with the specific use, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A method for manufacturing heat exchangers usable as static rack evaporators in cabinet refrigerators or freezers, composed of a plurality of racks (2, 3, 4) comprising
- a step for providing, by bending on a primary plane a same metal tube, said plurality of racks (2, 3, 4), each constituted by a coil composed of straight portions alternated with bends of said tube which are substantially coplanar; the coils of two contiguous racks (2, 3, 4) being mutually connected by a substantially straight intermediate portion (6, 7) of said tube and being arranged on mutually opposite sides with respect to a plane of symmetry (A) which is perpendicular to said primary plane and to said intermediate portion (6, 7) of the tube and being mutually offset along a direction which is parallel to said plane of symmetry (A);
- a step for welding metal wires (5) to all the straight portions of the coil of each rack (2, 3, 4);
- a step for subjecting said each intermediate tube portion (6, 7) to torsion about its own axis in order to move one rack on a plane which is inclined with respect to the plane of arrangement of the contiguous rack;
- a first step for bending, at an angle of substantially 90°,said each intermediate tube portion (6, 7) at one of its ends connected to one of said plurality of racks;
- a second step for bending, at an angle of substantially 90°, said each intermediate tube portion (6, 7) at its other end connected to said contiguous rack;
said first bending step and said second bending step being performed in a same bending direction on bending planes which are inclined with respect to the planes of arrangement of said plurality of racks (2, 3, 4) mutually connected by said each intermediate tube portion (6, 7); the breadth of the angles of inclination of said bending planes with respect to the planes of arrangement of said racks (2, 3, 4) and the breadth of the torsion angle during said torsion step being such as to produce, as a whole, a rotation through substantially 180° of said rack (2, 3, 4) in its plane of arrangement and a rotation through substantially 180° about its side connected to said contiguous rack by said intermediate tube portion (6, 7) in order to move said rack so that it faces said contiguous rack in a parallel arrangement and is connected to said contiguous rack by said intermediate tube portion (6, 7), which protrudes from one end of a perimetric side of said rack to the opposite end of the perimetric side that faces it of said contiguous rack,
**characterized in that** all said intermediate portions (6,7) lie in a same plane which is substantially perpendicular to said planes of arrangement of said plurality of racks (2, 3, 4).

2. The method according to claim 1, **characterized in that** said straight portions of the coil of each rack (2, 3, 4) are substantially mutually parallel.

3. The method according to claims 1 and 2, **characterized in that** said metal wires (5) are welded to the corresponding coil on both of the larger faces of each rack (2, 3, 4).

4. The method according to one or more of the preceding claims, **characterized in that** said metal wires (5), on each of the larger faces of each rack (2, '3, 4), are welded to all the straight portions of the coil.

5. The method according to one or more of the preceding claims, **characterized in that** said metal wires (5) are arranged parallel to each other and are oriented at right angles to said straight portions of the coil.

6. The method according to one or more of the preceding claims, **characterized in that** at the end of said step for providing said plurality of racks (2, 3, 4) by bending a continuous tube on a primary plane, said straight portions of the coils and said each intermediate tube portion (6, 7) are mutually parallel.

7. The method according to one or more of the preceding claims, **characterized in that** at the end of said step for providing said plurality of racks (2, 3, 4) by bending a continuous tube on a primary plane, said each intermediate tube portion (6, 7) constitutes a common extension for two straight portions of the coils which form respectively a perimetric side of said rack (2, 3, 4) and a perimetric side of said contiguous rack (2, 3, 4).

8. The method according to one or more of the preceding claims, **characterized in that** said torsion step is performed by locking said each intermediate tube portion (6, 7) and forcing a rotation of one end of each intermediate tube portion (6, 7) with respect to the other end of each intermediate tube portion about the axis of said intermediate tube portion (6, 7).

9. A heat exchanger (1) usable as rack evaporator in cabinet refrigerators or freezers, comprising a plurality of racks (2, 3, 4) which face each other on mutually parallel planes, each rack (2, 3, 4) being constituted by a coil of tube composed of straight portions alternated with substantially coplanar bends, and with metal wires (5) which are welded at least to the straight portions of the coil of each rack (2, 3, 4), the coils of said racks (2, 3, 4) being provided by bending a single tube and said metal wires (5) being welded to all the straight portions of the coil of each rack (2, 3, 4), the coils of two contiguous racks (2, 3, 4) are mutually connected by an intermediate portion (6, 7) of said tube, which is inclined with respect to the planes of arrangement of said racks (2, 3, 4) and runs from one end of a perimetric side of one rack (2, 3, 4) to an opposite end of the perimetric side that faces it of said or contiguous rack (2, 3, 4), and **characterized in that** all said intermediate portions lie in a same plane which is substantially perpendicular to said planes of arrangement of said plurality of racks (2, 3, 4)

10. The heat exchanger according to claim 9, **characterized in that** on both larger faces of said plurality of racks (2, 3, 4) there are metal wires (5) which are welded to said straight portions of the coil.

11. The heat exchanger according to one or more of the preceding claims, **characterized in that** it comprises at least three racks (2, 3, 4) which face each other and are composed of coils provided by bending a same tube.

12. The heat exchanger according to one or more of the preceding claims, **characterized in that** it comprises at least two rack assemblies, at least one of said rack assemblies being composed of a plurality of racks (2, 3, 4) which are composed of coils provided by bending a same tube.

## Patentansprüche

1. Ein Verfahren zur Herstellung von Wärmetauschern, die als statische Gestellverdampfer in Kühl- oder Gefrierschränken benutzt werden können, bestehend aus einer Vielzahl von Gestelle (2, 3, 4), Folgendes umfassend:
- einen Schritt zur Bereitstellung, durch Biegen eines selben Metallrohrs auf einer Hauptebene, der Vielzahl von Gestellen (2, 3, 4), jeweils bestehend aus einer Rohrschlange, das aus geraden Abschnitten, abwechselnd mit Biegungen des Rohrs, besteht, die im Wesentlichen koplanar sind; wobei die Rohrschlangen zweier benachbarter Gestelle (2, 3, 4) miteinander durch einen im Wesentlichen geraden intermediären Abschnitt (6, 7) des Rohrs verbunden und auf einander gegenüberliegenden Seiten mit Bezug auf eine Symmetrieebene (A) angeordnet sind, welche senkrecht zu der Hauptebene und zu dem intermediären Abschnitt (6, 7) des Rohrs ist, und zueinander versetzt entlang einer Richtung, die parallel zu der Symmetrieebene (A) ist;
- einen Schritt zum Abschweißen von Metalldrähten (5) an alle geraden Abschnitte der Rohrschlange eines jeden Gestells (2, 3, 4);
- einen Schritt zum Unterziehen jedes intermediären Rohrabschnitts (6, 7) gegenüber Drehung um seine eigene Achse, um ein Gestell auf einer Ebene zu bewegen, die im Verhältnis zur Anordnungsebene des benachbarten Gestells geneigt ist;
- einen ersten Schritt zum Biegen, in einem Winkel von im Wesentlichen 90°, jedes intermediären Rohrabschnitts (6, 7) an einem seiner Enden, der mit einem der Vielzahl von Gestellen verbunden ist;
- einen zweiten Schritt zum Biegen, in einem Winkel von im Wesentlichen 90°, jedes intermediären Rohrabschnitts (6, 7) an seinem anderen Ende, der mit dem benachbarten Gestell verbunden ist;
wobei der erste Biegeschritt und der zweite Biegeschritt in einer selben Biegerichtung auf Biegeebenen durchgeführt werden, die im Verhältnis zu den Anordnungsebenen der Vielzahl von Gestellen (2, 3, 4) geneigt sind, welche durch jeden intermediären Rohrabschnitt (6, 7) miteinander verbunden sind; wobei die Breite der Neigungswinkel der Biegeebenen im Verhältnis zu den Anordnungsebenen der Gestelle (2, 3, 4) und die Breite des Drehungswinkels während des Drehungsschritts derart sind, dass sie als Ganzes eine Drehung um im Wesentlichen 180° des Gestells (2, 3, 4) auf seiner Anordnungsebene und eine Drehung um im Wesentlichen 180° um seine Seite, die durch den intermediären Rohrabschnitt (6, 7) mit dem benachbarten Gestell verbunden ist, erzeugen, um das Gestell so zu bewegen, dass es dem benachbarten Gestell in einer parallelen Anordnung gegenüberliegt und mit dem benachbarten Gestell durch den intermediären Rohrabschnitt (6, 7) verbunden ist, der von einem Ende einer perimetrischen Seite des Gestells zum gegenüberliegenden Ende der perimetrischen Seite des benachbarten Gestells herausragt, die ihm gegenüberliegt,
**dadurch gekennzeichnet, dass** alle intermediären Abschnitte (6, 7) auf einer selben Ebene liegen, die im Wesentlichen senkrecht zu den Anordnungsebenen der Vielzahl von Gestellen (2, 3, 4) ist.

2. Das Verfahren gemäß Anspruch 1, **dadurch gekennzeichnet, dass** die geraden Abschnitte der Rohrschlange eines jeden Gestells (2, 3, 4) im Wesentlichen zueinander parallel sind.

3. Das Verfahren gemäß den Ansprüchen 1 und 2, **dadurch gekennzeichnet, dass** die Metalldrähte (5) an die entsprechende Rohrschlange an beiden der größeren Flächen jedes Gestells (2, 3, 4) angeschweißt sind.

4. Das Verfahren gemäß einem oder mehreren der obigen Ansprüche, **dadurch gekennzeichnet, dass** die Metalldrähte (5), auf jeder der größeren Flächen jedes Gestells (2, 3, 4), mit allen geraden Abschnitten der Rohrschlange verschweißt sind.

5. Das Verfahren gemäß einem oder mehreren der obigen Ansprüche, **dadurch gekennzeichnet, dass** die Metalldrähte (5) parallel zueinander angeordnet und in rechten Winkeln zu den geraden Abschnitten der Rohrschlange ausgerichtet sind.

6. Das Verfahren gemäß einem oder mehreren der obigen Ansprüche, **dadurch gekennzeichnet, dass** am Ende des Schritts zur Bereitstellung der Vielzahl von Gestellen (2, 3, 4) durch Biegen eines durchgehenden Rohrs auf einer Hauptebene die geraden Abschnitte der Rohrchlangen und jeder intermediäre Rohrabschnitt (6, 7) zueinander parallel sind.

7. Das Verfahren gemäß einem oder mehreren der obigen Ansprüche, **dadurch gekennzeichnet, dass** am Ende des Schritts zur Bereitstellung der Vielzahl von Gestellen (2, 3, 4) durch Biegen eines durchgehenden Rohrs auf einer Hauptebene jeder intermediäre Rohrabschnitt (6, 7) eine gemeinsame Verlängerung für zwei gerade Abschnitte der Rohrschlangen darstellt, die eine perimetrische Seite des Gestells (2, 3, 4) beziehungsweise eine perimetrische Seite des benachbarten Gestells (2, 3, 4) bilden.

8. Das Verfahren gemäß einem oder mehreren der obigen Ansprüche, **dadurch gekennzeichnet, dass** der Drehungsschritt durchgeführt wird durch Blockieren jedes intermediären Rohrabschnitts (6, 7) und Erzwingen einer Drehung eines Endes jedes intermediären Rohrabschnitts (6, 7) im Verhältnis zum anderen Ende jedes intermediären Rohrabschnitts um die Achse des intermediären Rohrabschnitts (6, 7).

9. Ein Wärmetauscher (1), der als Gestellverdampfer in Kühl- oder Gefrierschränken benutzt werden kann und eine Vielzahl von Gestellen (2, 3, 4) umfasst, die einander auf zueinander parallelen Ebenen gegenüberliegen, wobei jedes Gestell (2, 3, 4) aus einer Rohrschlange eines Rohrs besteht, das aus geraden Abschnitten besteht, die mit im Wesentlichen koplanaren Biegungen abwechseln, und mit Metalldrähten (5), die mindestens mit den geraden Abschnitten der Rohrschlange eines jeden Gestells (2, 3, 4) verschweißt sind, wobei die Rohrschlangen der Gestelle (2, 3, 4) bereitgestellt werden durch Biegen eines einzigen Rohrs und die Metalldrähte (5) mit allen geraden Abschnitten der Rohrschlange eines jeden Gestells (2, 3, 4) verschweißt sind, die Rohrschlagen zweier benachbarter Gestelle (2, 3, 4) sind miteinander durch einen intermediären Abschnitt (6, 7) des Rohrs verbunden, der im Verhältnis zu den Anordnungsebenen der Gestelle (2, 3, 4) geneigt ist und von einem Ende einer perimetrischen Seite eines Gestells (2, 3, 4) zu einem gegenüberliegenden Ende der perimetrischen Seite des oder des benachbarten Gestells (2, 3, 4) verläuft, die ihm gegenüberliegt, und **dadurch gekennzeichnet, dass** alle intermediären Abschnitte auf einer selben Ebene liegen, die im Wesentlichen senkrecht zu den Anordnungsebenen der Vielzahl von Gestellen (2, 3, 4) ist.

10. Der Wärmetauscher gemäß Anspruch 9, **dadurch gekennzeichnet, dass** sich auf beiden größeren Flächen der Vielzahl von Gestellen (2, 3, 4) Metalldrähte (5) befinden, die mit den geraden Abschnitten der Rohrschlange verschweißt sind.

11. Der Wärmetauscher gemäß einem oder mehreren der obigen Ansprüche, **dadurch gekennzeichnet, dass** er mindestens drei Gestelle (2, 3, 4) umfasst, die einander gegenüberliegen und aus Rohrschlangen bestehen, welche durch Biegen eines selben Rohrs hergestellt werden.

12. Der Wärmetauscher gemäß einem oder mehreren der obigen Ansprüche, **dadurch gekennzeichnet, dass** er mindestens zwei Gestellaufbauten umfasst, wobei mindestens einer der Gestellaufbauten aus einer Vielzahl von Gestellen (2, 3, 4) besteht, welche aus Rohrschlangen bestehen, die durch Biegen eines selben Rohrs hergestellt werden.

## Revendications

1. Procédé de fabrication d'échangeurs de chaleur utilisables comme évaporateurs étagères statiques dans des réfrigérateurs ou congélateurs bahuts, composés d'une pluralité d'étagères (2, 3, 4), comprenant
- une étape pour réaliser, par cintrage d'un même tube métallique dans un plan primaire, ladite pluralité d'étagères (2, 3, 4) constituées chacune d'un serpentin composé de parties rectilignes alternant avec des coudes dudit tube qui sont sensiblement dans le même plan, les serpentins de deux étagères contiguës (2, 3, 4) étant reliés l'un à l'autre par une partie intermédiaire sensiblement rectiligne (6, 7) dudit tube et étant disposés sur des côtés mutuellement opposés par rapport à un plan de symétrie (A) perpendiculaire audit plan primaire et à ladite partie intermédiaire (6, 7) du tube et étant mutuellement décalés dans une direction parallèle audit plan de symétrie (A) ;
- une étape pour souder des fils métalliques (5) à toutes les parties rectilignes du serpentin de chaque étagère (2, 3, 4) ;
- une étape pour faire subir à chaque dite partie intermédiaire (6, 7) du tube une torsion autour de son propre axe afin de faire bouger une étagère dans un plan incliné par rapport au plan dans lequel est disposée l'étagère contiguë ;
- une première étape pour cintrer, suivant un angle de sensiblement 90°, chaque dite partie intermédiaire (6, 7) du tube à une de ses extrémités reliée à une étagère de la pluralité d'étagères;
- une seconde étape pour cintrer, suivant un angle de sensiblement 90°, chaque dite partie intermédiaire (6, 7) du tube à son autre extrémité reliée à ladite étagère contiguë ;
ladite première étape de cintrage et ladite seconde étape de cintrage étant exécutées dans une même direction de cintrage dans des plans de cintrage inclinés par rapport aux plans dans lesquels sont disposées la pluralité d'étagères (2, 3, 4) reliées les unes aux autres par chaque dite partie intermédiaire (6, 7) de tube, la largeur des angles d'inclinaison desdits plans de cintrage par rapport aux plans dans lesquels sont disposées lesdites étagères (2, 3, 4) et la largeur de l'angle de torsion pendant ladite étape visant à produire, globalement, une rotation sur sensiblement 180° de ladite étagère (2, 3, 4) dans le plan dans lequel elle est disposée et une rotation sur sensiblement 180° autour de son côté relié à ladite étagère contiguë par ladite partie intermédiaire (6, 7) de tube afin de faire bouger ladite étagère de façon qu'elle soit en regard de ladite étagère contiguë en étant disposée parallèlement et qu'elle soit reliée à ladite étagère contiguë par ladite partie intermédiaire (6, 7) de tube, qui fait saillie depuis une extrémité d'un côté périphérique de ladite étagère jusqu'à l'extrémité opposée du côté périphérique, qui lui fait face, de ladite étagère contiguë,
**caractérisé en ce que** toutes lesdites parties intermédiaires (6, 7) se trouvent dans un même plan sensiblement perpendiculaire auxdits plans dans lesquels sont disposées ladite pluralité d'étagères (2, 3, 4).

2. Procédé selon la revendication 1, **caractérisé en ce que** lesdites parties rectilignes du serpentin de chaque crémaillère (2, 3, 4) sont sensiblement mutuellement parallèles.

3. Procédé selon les revendications 1 et 2, **caractérisé en ce que** lesdits fils métalliques (5) sont soudés au serpentin correspondant sur les deux grandes faces de chaque serpentin (2, 3, 4).

4. Procédé selon une ou plusieurs des revendications précédentes, **caractérisé en ce que** lesdits fils métalliques (5), sur chacune des grandes faces de chaque serpentin (2, 3, 4) sont soudés à toutes les parties rectilignes du serpentin,

5. Procédé selon une ou plusieurs des revendications précédentes, **caractérisé en ce que** lesdits fils métalliques (5) sont disposés parallèlement les uns aux autres et sont orientés à angle droit par rapport auxdites parties rectilignes du serpentin.

6. Procédé selon une ou plusieurs des revendications précédentes, **caractérisé en ce qu'**à la fin de ladite étape pour réaliser ladite pluralité d'étagères (2, 3, 4) par cintrage d'une tube continu dans un plan primaire, lesdites parties rectilignes des serpentins et chaque dite partie intermédiaire (6, 7) du tube sont mutuellement parallèles.

7. Procédé selon une ou plusieurs des revendications précédentes, **caractérisé en ce qu'**à la fin de ladite étape pour réaliser ladite pluralité d'étagères (2, 3, 4) par cintrage d'un tube continu dans un plan primaire, chaque dite partie intermédiaire (6, 7) de tube constitue un prolongement commun pour deux parties rectilignes des serpentins qui forment respectivement un côté périphérique de ladite étagère (2, 3, 4) et un côté périphérique de ladite étagère contiguë (2, 3, 4).

8. Procédé selon une ou plusieurs des revendications précédentes, **caractérisé en ce que** ladite étape de torsion est exécutée en bloquant chaque dite partie intermédiaire (6, 7) de tube et en provoquant une rotation d'une extrémité de chaque partie intermédiaire (6, 7) de tube par rapport à l'autre extrémité de chaque partie intermédiaire de tube autour de l'axe de ladite partie intermédiaire (6, 7) de tube.

9. Echangeur (1) de chaleur utilisable comme évaporateur étagère dans des réfrigérateurs ou des congélateurs bahuts, comprenant une pluralité d'étagères (2, 3, 4) en regard les unes des autres dans des plans mutuellement parallèles, chaque étagère (2, 3, 4) étant constituée par un serpentin de tube composé de parties rectilignes alternant avec des coudes sensiblement dans le même plan, et avec des fils métalliques (5) soudés au moins aux parties rectilignes du serpentin de chaque étagère (2, 3, 4), les serpentins desdites étagères (2, 3, 4) étant réalisés en cintrant un unique tube et lesdits fils métalliques (5) étant soudés à toutes les parties rectilignes du serpentin de chaque étagère (2, 3, 4), les serpentins de deux étagères contiguës (2, 3, 4) étant reliés l'un à l'autre par une partie intermédiaire (6, 7) dudit tube, qui est inclinée par rapport aux plans dans lesquels sont disposées lesdites étagères (2, 3, 4) et passe d'une extrémité d'un côté périphérique d'une étagère (2, 3, 4) à une extrémité opposée du côté périphérique, qui lui fait face, de ladite étagère contiguë (2, 3, 4), et **caractérisé en ce que** toutes lesdites parties intermédiaires se trouvent dans un même plan sensiblement perpendiculaire auxdits plans dans lesquels sont disposées ladite pluralité d'étagère (2, 3, 4).

10. Echangeur de chaleur selon la revendication 9, **caractérisé en ce que**, sur les deux grandes faces de ladite pluralité d'étagères (2, 3, 4), se trouvent des fils métalliques (5) soudés auxdites parties rectilignes du serpentin.

11. Echangeur de chaleur selon une ou plusieurs des revendications précédentes, **caractérisé en ce qu'**il comprend au moins trois étagères (2, 3, 4) qui se font face et sont composées de serpentins réalisés en cintrant un même tube.

12. Echangeur de chaleur selon une ou plusieurs des revendications précédentes, **caractérisé en ce qu'**il comprend au moins deux ensembles d'étagères, au moins un desdits ensembles d'étagères étant composé d'une pluralité d'étagères (2, 3, 4) composées d'étagères réalisées en cintrant un même tube.
